# EUROPEAN PATENT SPECIFICATION

(11) **EP 2 397 355 B1**
(45) Date of publication and mention of the grant of the patent: **13.03.2013**
(21) Application number: 10425202.8
(22) Date of filing: 16.06.2010
(51) Int. Cl.: B60K 6/48, B60W 50/02, B60W 50/029

(54) **Control method for a parallel hybrid traction system for a vehicle with an automatic transmission**
Steuerungverfahren für ein Parallelhybridfahrzeug
Methode de control d'un vehicle hybride parallèle

(43) Date of publication of application: 21.12.2011
(73) Proprietor: ALTRA S.P.A., 16141 Genova (IT)
(72) Inventor: Mantovani, Giorgio, 17015 Celle Ligure (IT)
(74) Representative: Borsano, Corrado

(56) References cited:
- EP-A1- 0 768 204
- DE-A1- 4 123 843
- DE-A1-102008 042 887
- US-A- 5 176 213
- US-A1- 2007 102 930
- US-A1- 2009 192 663
- US-A1- 2010 145 562
- US-B1- 6 209 672

## Description

### Application field of the invention

The present invention relates to a method for controlling a parallel hybrid driving system, and corresponding driving system, for a vehicle equipped with automatic gear box, especially an industrial or commercial vehicle suitable to be used primarily in urban areas, and more precisely in a vehicle equipped with hybrid driving of the parallel type, with single clutch.

### Description of the prior art

A type of industrial or commercial vehicle equipped with hybrid driving of the parallel type is known in the art, comprising a internal combustion engine, an electric motor-generator, equipped with a DC/AC inverter and with a high-tension electric driving battery, a clutch unit placed between the two engines, and a transmission system comprising an automatic gear box.

In such type of vehicles some operating modes are known in the art, which include controlling the separate activation or deactivation of the internal combustion engine or of the electric motor-generator, or their simultaneous functioning in hybrid mode (electric power boost): in the latter case the power required to move the vehicle is provided by the combination of electric motor and internal combustion engine contributions.

The regenerative braking function is also known in the art: the kinetic energy of the vehicle is converted, during the braking phases, into electric energy by the electric motor-generator and is stored in the high voltage electric traction battery by means of the inverter.

Especially in case of prevalent use of such vehicle in urban areas, it is necessary to improve its functionalities as regards above all the reduction of fuel consumption and of pollutant emissions, as well as of noise emissions, for example by increasing the time percentage in which the electric motor provides for the driving and the internal combustion engine is stopped.

EP0768204A1 shows a scheme where an electric motor is able to drive, alone, a vehicle also under certain fault conditions, describing all features of preamble of claim 1.

Problems thus arise in relation to the management of the operating logic of such parallel hybrid driving system, also due to the presence of a single clutch unit, and also in relation to the reduction of costs and complexity of the mechanical scheme.

### Summary of the invention

Therefore the aim of the present invention is to provide a method for controlling a parallel hybrid driving system for a vehicle equipped with automatic gear box, and corresponding driving system, suitable to overcome all the drawbacks mentioned above.

It is object of the present invention, according to claim 1, a method for controlling a parallel hybrid driving system for a vehicle equipped with automatic gear box, internal combustion engine, electric motor-generator and driving batteries, the method being suitable for controlling the functioning of the driving system according to a hybrid mode and an electric mode, and comprising the steps of:
- determining the functioning in hybrid mode at the starting of the internal combustion engine, conditional upon a first fault verification in said electric motor-generator;
- determining the shifting to said electric mode, also being automatically driven, wherein the internal combustion engine is stopped, if:
- the vehicle's speed is lower than a first threshold;
- the status of charge of the driving batteries is higher than a minimum percentage value;
- no faults are detected;
otherwise keeping the hybrid mode.

The object of the present invention is in particular a method for controlling a parallel hybrid driving system for a vehicle equipped with automatic gear box, and corresponding driving system, as described more fully in the claims, which are an integral part of this description.

### Brief description of the Figures

Further purposes and advantages of the present invention will become clear from the following detailed description of a preferred embodiment (and its alternative embodiments) and the drawings that are attached hereto, which are merely illustrative and non-limitative, in which:
figure 1 shows a general scheme of a parallel hybrid driving system of a vehicle suitable to realize the method according to the invention;
figures 2, 3 and 4 show the operating flowchart of the control method that is object of the invention, respectively referring to the starting steps of the vehicle, its functioning in hybrid and in electric mode.

### Detailed description of the invention

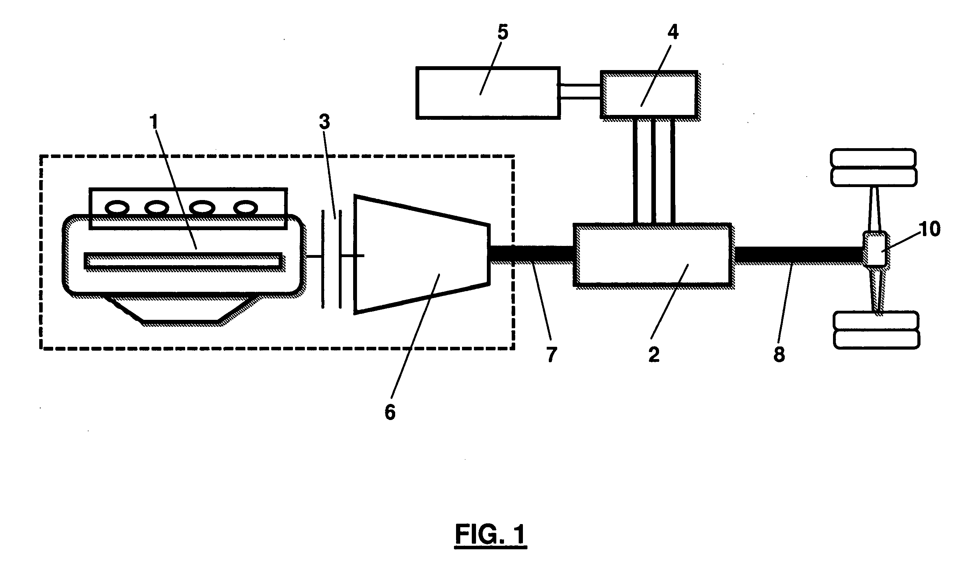

With reference to figure 1, a parallel hybrid driving system comprises a internal combustion engine 1, an electric motor-generator 2, equipped with a DC/AC inverter 4 and with a high-tension electric traction battery 5, a clutch unit 3, and a transmission system 6 comprising an automatic gear box.

The clutch 3 is shown in figure as a separate element, being placed between the internal combustion engine 1 and the transmission system 6, but being usually integrated in the automatic gear box.

The electric motor-generator 2 is placed downstream of the transmission system 6, on the shaft transmitting the torque to the bridge 10 of the driving axle.

The electric motor-generator 2 is preferably placed between two segments 7 and 8 of the transmission shaft by means of flanges. Thus it is even possible to adapt a driving system scheme which originally did not include any electric motor-generator, since it is just necessary to break up the transmission shaft into two parts, without introducing further components, such as gears, to reduce or to adapt the input and output rpm of the electric motor-generator.

It is sufficient that the electric motor-generator has appropriate dimensions, so that it has low power, but very high torque, since it is connected to a shaft working at low rpm. Thus it is possible to reduce manufacturing costs and obtain an easy-to-manufacture system.

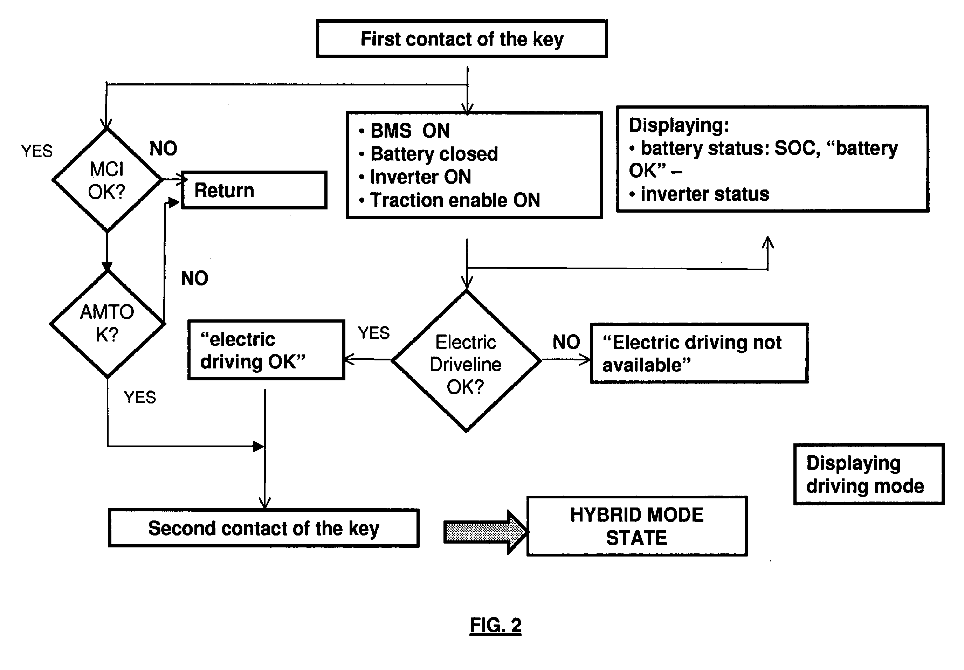

With reference to figures 2, 3 and 4, the method for controlling the parallel hybrid driving system of the vehicle equipped with automatic gear box, that is object of the invention, is described in the following.

In order to actuate the method, there is a control logic, stored in one or more electronic control units that may at least in part be already present on the vehicle, with appropriate computer programs.

For example, the control logic includes a control unit for controlling the functioning of the electric motor-generator, which performs a bidirectional dialogue with a vehicle's control unit which dialogues in its turn with a control unit of the internal combustion engine.

The control logic has at its disposal, by means of the vehicle data line CAN, the indications coming from a control unit of the driving battery, with the indication SOC of the battery status of charge.

The control logic has also at its disposal, by means of the vehicle data line CAN, the signals indicating the position of the accelerator pedal and of the state of the automatic gear box, which can be, in a known way, in "D" for drive, or in "N" for neutral.

In particular, as regards the accelerator pedal, the information relating the speed variation of the position is also available.

In general, the control method provides for giving priority to the hybrid mode when the vehicle is used in extra-urban areas and to give priority to the only electric mode when the vehicle is used in urban areas.

With reference to figure 2, at the first contact of the key, the logic performs a control of the internal combustion engine and verifies if the internal combustion engine has any fault (MCI OK): in case of a fault, the logic provides a message asking to return to the repair shop (Return), because of faults of the internal combustion engine.

Then the logic verifies possible faults of the automatic gear box (AMT OK): in case of a fault, the logic provides a message asking to return to the repair shop (Return), because of faults of the automatic gear box.

Moreover, always at the first contact of the key, the logic verifies if: the system managing the traction batteryis on (BMS ON), and if also the inverter is on (Inverter ON). Then it verifies if batteries and inverter have errors or faults, if the status of charge (SOC) is higher than a predefined value, if the pre-charging procedure was successful and closed the power circuit of the batteries. These controls generate their respective warnings on a display at the driver's disposal: for example the status of charge of the battery (SOC), namely the percentage of instantaneous charge, if it is working (battery OK), and the state of the inverter.

Said controls are integrated by a more general control of the status or the electric driving system (Electric Driveline OK) available by means of the CAN line. If it is negative, the message "Electric driving not available" is provided; on the contrary, if it is positive, the message provided is "Electric driving OK".

Thus the logic generates the second contact of the key.

If these controls are positive, the driving key is set in hybrid mode when the vehicle is started.

The driving operating conditions are the following:
- the status of charge of the traction batterySOC has to be higher than a threshold SOCₜₕ , for example = 50%, below which the electric motor-generator cannot function as motor but only as electric generator;
- by means of the CAN data line it is possible to know the state of the automatic gear box, which is the engaged gear and if the operating mode is "D";
- the regenerative braking function provided by the electric motor-generator is enabled;
- it is also possible to enable a function called "freewheeling", which automatically stops the internal combustion engine when the vehicle's speed is lower than a threshold Vₜ, for example 50 km/h. In this case the logic controls the clutch which has to open or it shifts the automatic gear box to neutral.

In hybrid mode the function "torque booster" is enabled wherein the electric motor may provide an additional torque with respect to the one generated by the internal combustion engine.

The "Torque booster" C_{EM} = f (SOC), namely the torque increase generated by the electric motor, is dependent on the status of charge of the battery.

Moreover the torque delivered by the electric motor depends also on the position of the accelerator pedal C_{EM} = f (Δa%), and on its derivative over time C_{EM} = f (Δa%/ Δt), namely the speed variation of the position, so that the entity of the increase of the torque generated by the electric motor depends also on the driving conditions determined by the driver and on the vehicle's speed.

Therefore in hybrid mode the driving type may be determined either by the internal combustion engine only, or by the electric motor only, or by both, in "Torque booster" mode.

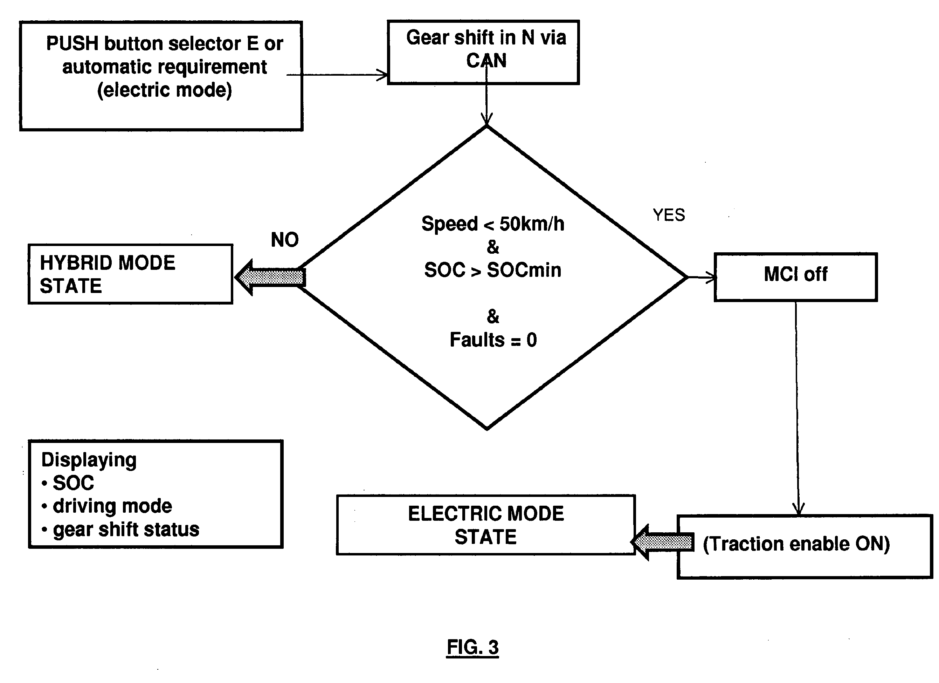

With reference to figure 3, it is possible to shift from the hybrid to the electric mode, also by means of an automatical control, for example when travelling in urban areas.

The driver may act on a button or on a switch on the dashboard (PUSH button selector D) in order to activate the "electric only" mode. The automatic transmission shifts to neutral.

In these conditions, the control logic verifies the enabling conditions of this mode. In particular:
- if the vehicle's speed is lower than a threshold, for example 50 km/h or a different threshold;
- if the status of charge SOC of the traction batteries is higher than a minimum percentage value SOCₘᵢₙ, for example 25% of the highest value;
- if no faults are detected (Faults = 0).

Then the logic enables the switching to the electric mode, wherein the internal combustion engine is stopped (MCI off), otherwise the vehicle keep working in hybrid mode. Also these controls generate their respective warnings on a display available to the driver.

In electric mode (Driving enable ON) the logic continually controls:
- if the speed is lower than the threshold;
- if the status of charge of the traction batteryis higher than SOCₘᵢₙ ;
- if the gear shift is in neutral.

Moreover the logic enables the regenerative braking function of the electric motor-generator, and enables the electric driving with a generation of the driving torque that is proportional to the pressure on the accelerator pedal.

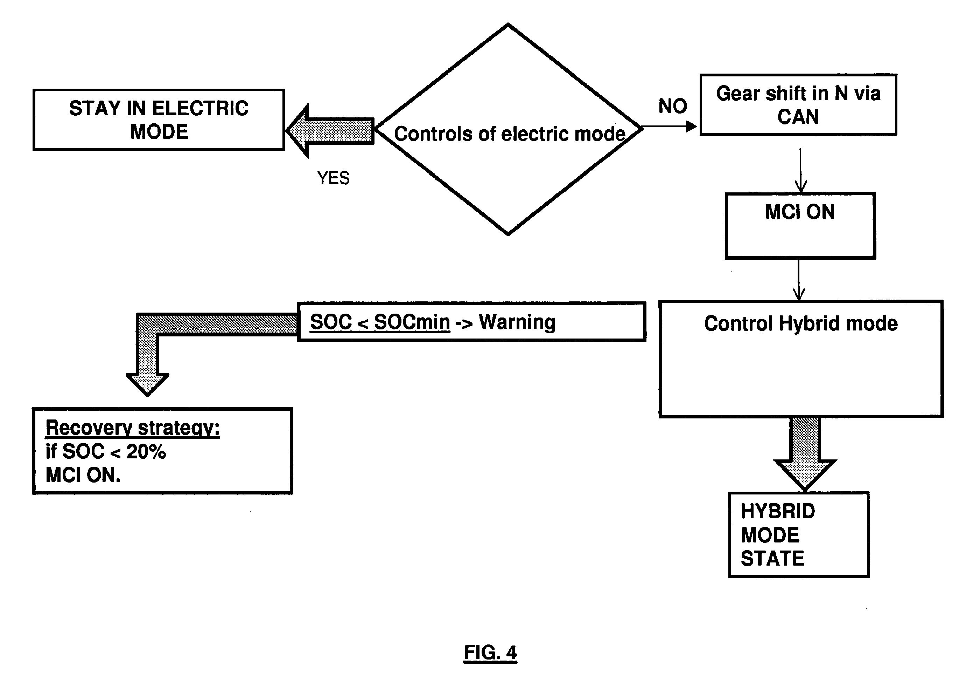

With reference to figure 4, the driving system remains in electric mode if the previous controls continue to be positive.

The vehicle is automatically switched back to the hybrid mode when the previous controls are no longer positive, or it is automatically switched to the hybrid mode when the driver pushes the button "E" (automatic gear box in "N"), or if the status of charge of the traction batterybecomes lower than a minimum value, for example the value SOCₘᵢₙ mentioned above, or a different value, for example 20%.

In this case the internal combustion engine is started again (MCI ON) and the driver acts on the automatic gear box shifting to "N", activating again the hybrid mode.

The control logic is also able to manage emergency situations.

In case of electric mode, it verifies the cases of faults of the electric driving and of the vehicle: in this case it starts a driving by means of the internal combustion engine only.

In case of hybrid mode, it verifies the cases of faults of the internal combustion engine or of the automatic gear box and of the vehicle: in this case it starts the driving of the electric motor alone.

The present invention may advantageously be realized by means of computer programs loaded on the various electronic control units of the vehicle, which comprises program code means performing one or more steps of said method, when said program is run on a computer. For this reason the scope of the present patent is meant to cover also said computer programs and the computer-readable means that comprise a recorded message, such computer-readable means comprising the program code means for performing one or more steps of such method, when such programs are run on a computer.

It will be apparent to the person skilled in the art that other alternative and equivalent embodiments of the invention can be conceived and reduced to practice without departing from the scope of the invention.

From the description set forth above it will be possible for the person skilled in the art to embody the invention with no need of describing further construction details.

## Claims

1. Method for controlling a parallel hybrid driving system for a vehicle equipped with automatic gear box (6), internal combustion engine (1), electric motor-generator (2), traction batteries (5) and a system managing the traction batteries and an inverter, the method being suitable for controlling the functioning of the driving system according to a hybrid mode and an electric mode, and comprising the steps of:
- determining at the starting of the internal combustion engine (1) the functioning in hybrid mode, conditional upon a first fault verification in said electric motor-generator (2)
- determining the shifting to said electric mode, also being automatically driven, wherein the internal combustion engine (1) is stopped, if:
- the vehicle's speed is lower than a first threshold;
- the status of charge (SOC) of the traction batteries is higher than a minimum percentage value (SOCₘᵢₙ);
- if no faults are detected (Faults = 0);
otherwise the hybrid mode is maintained, **characterised in that** always at the first contact of the key, further comprising a verification if: the system managing the traction batteries is on (BMS ON), and if the inverter is on (Inverter ON);

2. Method according to claim 1, in which said hybrid mode comprises the steps of:
- verifying that the status of charge (SOC) of the traction batteryis higher than a threshold (SOCₜₕ) , below which the electric motor-generator cannot function as motor but only as electric generator;
- enabling the regenerative braking function provided by the electric motor-generator;
- enabling the "torque booster" function wherein the electric motor-generator is suitable to provide additional torque to the one generated by the internal combustion engine, said additional torque being proportional to said status of charge (SOC) of the traction battery and being dependent on the position of the accelerator pedal (C_{EM} = f (Δa%)), and on its derivative over time (C_{EM} = f (Δa%/Δt) and on the vehicle's speed.

3. Method according to claim 2, wherein said hybrid mode comprises the step enabling a "freewheeling" function, wherein the automatic stopping of the internal combustion engine is determined if the vehicle's speed is lower than a threshold (Vₜ).

4. Method according to claim 1, in which said first fault verification comprises: verification that the management system of the traction batteries is working; checking of the state of the electric driving system.

5. Parallel hybrid driving system for a vehicle equipped with automatic gear box (6), wherein said electric motor-generator (2) is placed downstream of said automatic gear box (6) on the transmission shaft (7, 8), and said system comprises a control logic suitable to realize the method of any of the previous claims.

6. Computer program comprising program code means suitable for performing the steps of any claim from 1 to 4, when such program is run on a computer.

7. Computer-readable means comprising a recorded program, said computer-readable means comprising program code means suitable for performing the steps according to the claims from 1 to 4, when said program is run on a computer.

## Patentansprüche

1. Verfahren zur Steuerung eines Parallelhybridantriebssystems für ein Fahrzeug, das mit einem automatischen Getriebe (6), einer Brennkraftmaschine (1), einem Elektromotor/Generator (2), Traktionsbatterien (5) und einem System, das die Traktionsbatterien und einen Wechselrichter verwaltet, ausgestattet ist, wobei das Verfahren zum Steuern des Betriebs des Antriebssystems in einem Hybridmodus und einem elektrischen Modus geeignet ist und die folgenden Schritte aufweist:
- Bestimmen, beim Starten der Brennkraftmaschine (1), des Betriebs im Hybridmodus, in Abhängigkeit von einer ersten Fehlerprüfung in dem Elektromotor/Generator (2);
- Bestimmen des Umschaltens in den elektrischen Modus, der ebenfalls automatisch angetrieben ist, wobei die Brennkraftmaschine (1) abgestellt wird, falls:
- die Geschwindigkeit des Fahrzeugs niedriger als ein erster Schwellenwert ist;
- der Ladezustand (State of Charge, SOC) der Traktionsbatterien höher als ein minimaler prozentualer Wert (SOCₘᵢₙ) ist;
- falls keine Fehler erkannt werden (Fehler = 0); andernfalls wird der Hybridmodus aufrechterhalten, **dadurch gekennzeichnet, dass** immer beim ersten Kontakt des Schlüssels das Verfahren ferner eine Überprüfung beinhaltet, ob:
das System, das die Traktionsbatterien verwaltet, EIN ist (BMS ON), und ob der Wechselrichter EIN ist (Inverter ON).

2. Verfahren nach Anspruch 1, wobei der Hybridmodus die folgenden Schritte aufweist:
- Überprüfen, ob der Ladezustand (SOC) der Traktionsbatterie höher als ein Schwellenwert (SOCₜₕ) ist, unterhalb dessen der Elektromotor/Generator nicht als Motor arbeiten kann, sondern nur als elektrischer Generator;
- Freigeben der regenerativen Bremsfunktion, die durch den Elektromotor/Generator gewährleistet wird;
- Freigeben der "Drehmomentverstärker"-Funktion (Torque Booster), wobei der Elektromotor/Generator geeignet ist, zusätzliches Drehmoment zu demjenigen, das von der Brennkraftmaschine erzeugt wird, zur Verfügung zu stellen, wobei dieses zusätzliche Drehmoment proportional zu dem Ladezustand (SOC) der Traktionsbatterie ist und abhängig von der Position des Gaspedals (C_{EM} = f(Δa%)) und deren Ableitung nach der Zeit (C_{EM} = f(Δa%/Δt)) und von der Geschwindigkeit des Fahrzeugs ist.

3. Verfahren nach Anspruch 2, wobei der Hybridmodus den Schritt des Freigebens einer "Freilauf"-Funktion aufweist, wobei das automatische Abschalten der Brennkraftmaschine bestimmt wird, wenn die Geschwindigkeit des Fahrzeugs niedriger als ein Schwellenwert (Vₜ) ist.

4. Verfahren nach Anspruch 1, wobei die erste Fehlerprüfung beinhaltet: Überprüfung, ob das Verwaltungssystem der Traktionsbatterien funktioniert; Prüfen des Zustands des elektrischen Antriebssystems.

5. Parallelhybridantriebssystem für ein Fahrzeug, das mit einem automatischen Getriebe (6) ausgestattet ist, wobei der Elektromotor/Generator (2) stromabwärts des automatischen Getriebes (6) auf der Getriebewelle (7, 8) angeordnet ist und das System eine Steuerungslogik aufweist, die geeignet ist, das Verfahren nach einem der vorhergehenden Ansprüche auszuführen.

6. Computerprogramm, welches Programmcodemittel aufweist, die geeignet sind, die Schritte nach einem der Ansprüche 1 bis 4 auszuführen, wenn dieses Programm auf einem Computer ausgeführt wird.

7. Computerlesbare Mittel, die ein gespeichertes Programm aufweisen, wobei die computerlesbaren Mittel Programmcodemittel aufweisen, die geeignet sind, die Schritte nach einem der Ansprüche 1 bis 4 auszuführen, wenn dieses Programm auf einem Computer ausgeführt wird.

## Revendications

1. Procédé de commande d'un système d'entraînement hybride parallèle pour un véhicule équipé d'une boîte de vitesse automatique (6), d'un moteur à combustion interne (1), d'un moteur-générateur électrique (2), de batteries de traction (5) et d'un système gérant les batteries de traction et un inverseur, le procédé convenant pour la commande du fonctionnement du système d'entraînement selon un mode hybride et un mode électrique, et comprenant les étapes de :
déterminer au démarrage du moteur à combustion interne (1) le fonctionnement en mode hybride, en fonction d'une première vérification de défaillance dans ledit moteur-générateur électrique (2) ;
déterminer le passage audit mode électrique, également entraîné automatiquement, où le moteur à combustion interne (1) est arrêté, si :
la vitesse du véhicule est inférieure à un premier seuil ;
l'état de charge (SOC) des batteries de traction est plus élevé qu'une valeur de pourcentage minimum (SOCₘᵢₙ) ;
si des défaillances ne sont pas détectées (défaillances = 0) ;
sinon le mode hybride est conservé,
**caractérisé en ce que** toujours au premier contact de la clef, comprenant en outre une vérification si le système gérant les batteries de traction est en service (BMS en service), et si l'inverseur est en service (Inverseur en service).

2. Procédé selon la revendication 1, dans lequel ledit mode hybride comprend les étapes de :
vérifier que l'état de charge (SOC) des batteries de traction est plus élevé qu'un seuil (SOCₜₕ), en dessous duquel le moteur-générateur électrique ne peut pas fonctionner comme moteur mais seulement comme générateur électrique ;
valider la fonction de freinage récupératif fournie par le moteur-générateur électrique ;
valider la fonction « amplificateur de couple » où le moteur-générateur électrique est apte à fournir un couple additionnel à celui produit par le moteur à combustion interne, ledit couple additionnel étant proportionnel audit état de charge (SOC) de la batterie de traction et dépendant de la position de la pédale de l'accélérateur (C_{EM} - f (Δa%)), et de sa dérivée sur le temps (C_{EM} = f (Δa%/Δt) et de la vitesse du véhicule.

3. Procédé selon la revendication 2, dans lequel ledit mode hybride comprend l'étape consistant à permettre une fonction « en roue libre », où l'arrêt automatique du moteur à combustion interne est déterminé si la vitesse du véhicule est inférieure à un seuil (Vₜ).

4. Procédé selon la revendication 1, dans lequel ladite première vérification de défaillance comprend : la vérification que le système de gestion des batteries de traction fonctionne ; la vérification de l'état du système d'entraînement électrique.

5. Système d'entraînement hybride parallèle pour un véhicule équipé d'une boîte de vitesse automatique (6), où ledit moteur-générateur électrique (2) est placé en aval de ladite boîte de vitesse automatique (6) sur l'arbre de transmission (7, 8), et ledit système comprend une logique de commande apte à réaliser le procédé selon l'une quelconque des revendications précédentes.

6. Programme d'ordinateur comprenant un moyen de code de programme apte à exécuter les étapes selon l'une quelconque des revendications 1 à 4 lorsqu'un tel programme est exécuté sur un ordinateur.

7. Moyen lisible par ordinateur comprenant un programme enregistré, ledit moyen lisible par ordinateur comprenant un moyen de code de programme apte à exécuter les étapes selon les revendications 1 à 4 lorsque ledit programme est exécuté sur un ordinateur.
